# EUROPEAN PATENT APPLICATION

(11) **EP 1 028 414 A1**
(43) Date of publication of application: **16.08.2000**
(21) Application number: 00102658.2
(22) Date of filing: 08.02.2000
(51) Int. Cl.: G11B 7/013, G11B 7/007, G11B 7/24, G11B 11/105

(54) **Optical recording medium**

(30) Priority: 09.02.1999 JP 3155199
(71) Applicant: SONY CORPORATION, Tokyo (JP)
(72) Inventor: Miura, Hiroshi, Shinagawa-ku, Tokyo (JP); Ikeda, Etsuro, Shinagawa-ku, Tokyo (JP); Sakai, Hiroyuki, Shinagawa-ku, Tokyo (JP)
(74) Representative: MÜLLER & HOFFMANN Patentanwälte

(57) **Abstract**

An optical recording medium, the recording density of which can be raised, and which is capable of stably performing a recording/reproducing operation is disclosed. A signal recording layer is formed on a substrate having grooves formed therein. The track pitch of the recording tracks, which are formed along the grooves and in which a recording signal is recorded/reproduced with respect to the signal recording layer, is 1.5 ± 0.01 µm, the width of the groove is not less than 730 nm nor more than 800 nm and the depth of the groove is not less than 65 nm nor more than 75 nm.

## Description

### BACKGROUND OF THE INVENTION

### Field of the Invention

The present invention relates to an optical recording medium incorporating a signal recording layer formed on a disc substrate having grooves formed on recording tracks thereof.

### Description of the Related Art

An optical recording medium is a recording medium incorporating a signal recording layer arranged to be irradiated with a laser beam by a recording/reproducing apparatus so that a recording signal is recorded and/or reproduced (hereinafter called "recorded/reproduced). The optical recording medium includes a read-only optical disc, a magneto-optical disc and a phase-change optical disc.

In general, the optical recording medium has a multilayer structure incorporating a substrate on which a first dielectric layer, a signal recording layer, a second dielectric layer and an optical reflecting layer are sequentially laminated. The optical recording medium is arranged to record/reproduce a recording signal with respect to a signal recording layer in a direction along the recording tracks. Grooves are formed on the substrate along the recording tracks. In recent years, a recording medium having a large capacity which is realized by raising the recording density has been required.

Hitherto, for example, a MD (Mini Disc) which is one of standards of the optical recording medium incorporates recording tracks, pitches of which are 1.6 µm. Thus, a capacity with which music signals or the like for 60 minutes or 74 minutes can be recorded/reproduced has been realized. To enlarge the storage capacity so as to record music signals or the like for a longer time, a contrivance has been suggested with which the track pitch is made to be 1.5 ± 0.01 µm so as to raise the recording density.

The optical recording medium, such as the MD, encounters a problem of reduction in a permissible quantity of deviation (hereinafter called a "defocus margin) of the focus of the recording/reproducing laser beam.

### SUMMARY OF THE INVENTION

Accordingly, an object of the present invention is to provide an optical recording medium arranged to maintain a sufficiently large defocus margin of the laser beam even if the track pitch is reduced to satisfactorily raise the recording density.

According to one aspect of the present invention, there is provided an optical recording medium comprising: a substrate on which a first dielectric layer, a signal recording layer, a second dielectric layer, a light reflecting layer and a protective-film layer are sequentially laminated, wherein the signal recording layer has grooves formed along recording tracks, the track pitch of the recording track is 1.5 ± 0.01 µm, the width of each of the grooves is not less than 730 nm nor more than 800 nm and the depth of each of the grooves is not less than 62 nm nor more than 75 nm.

The optical recording medium structured as described above such that the track pitch of the recording tracks and the width and depth of the grooves are determined as described above. Therefore, the recording density of the optical recording medium according to the present invention can be raised as compared with the recording density of the conventional optical recording medium. Moreover, a sufficiently large defocus margin of the laser beam with which a recording signal is recorded/reproduced can be maintained.

Other objects, features and advantages of the invention will be evident from the following detailed description of the preferred embodiments described in conjunction with the attached drawings.

### BRIEF DESCRIPTION OF THE DRAWINGS

Fig. 1 is a schematic view showing a magneto-optic disc according to the present invention;
Fig. 2 is a perspective and enlarged cross sectional view showing a portion represented by reference numeral 1a shown in Fig. 1;
Fig. 3 is a graph showing the relationship between depths of grooves of the magneto-optic disc according to the present invention and quantities of defocus;
Fig. 4 is a graph showing the relationship between width of the grooves of the magneto-optic disc and quantities of defocus; and
Fig. 5 is a graph showing the relationship between depths of the grooves of the magneto-optic disc according to the present invention and widths of the grooves.

### DESCRIPTION OF THE PREFERRED EMBODIMENTS

An embodiment of the present invention will now be described with reference to the drawings. Note that a magneto-optic disc is taken as an example of an optical recording medium according to the present invention. Note that the present invention is not limited to the magneto-optic disc. The present invention may widely be applied to optical recording mediums of a type arranged to be irradiated with a laser beam so that recording/reproducing is performed. The present invention may be applied to, example, a read-only optical disc having a predetermined pattern composed of pits and projections corresponding to a recording signal. The present invention may as well as be applied to a phase-change optical disc incorporating a signal recording layer made of a phase-change material. When the foregoing signal recording layer is irradiated with light beams having different intensities, the recording signal is recorded/reproduced. Thus, a so-called phase-change recording method is employed to record/reproduce the recording signal. As an alternative to this, the present invention may be applied to a write-once optical disc, such as a CD-R or a DVD-R. The write-once optical disc incorporates a signal recording layer which is constituted by a pigment layer made of an organic pigment material, such as cyanine or phthalocyanine.

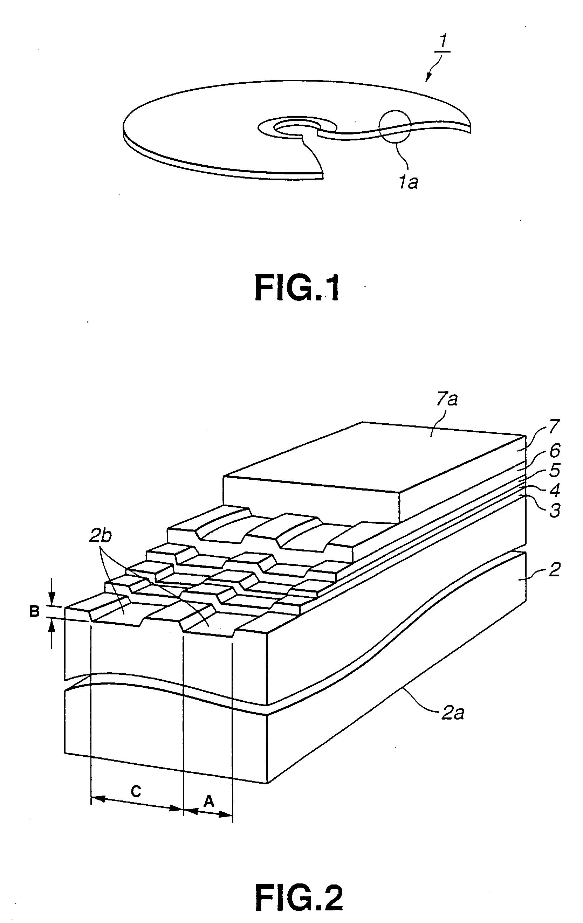

A magneto-optic disc 1 structured as shown in Figs. 1 and 2 will now be described. The magneto -optic disc 1 is an erasable magneto-optic disc with which recording signals can repeatedly be recorded and erased. The magneto-optical disc 1 is accommodated in, for example, a disc cartridge (not shown) so as to be detachable with respect to a recording/reproducing apparatus (not shown).

As shown in Figs. 1 and 2, the magneto-optical disc 1 incorporates a substrate 2 on which a first dielectric layer 3, a signal recording layer 4, a second dielectric layer 5, a light reflecting layer 6 and a protective-film layer 7 are sequentially laminated.

When a recording signal is recorded on the magneto-optical disc 1 by a recording/reproducing apparatus, a main surface 2a of the substrate 2 of the magneto-optical disc 1 facing the outside of the substrate 2 is irradiated with a laser beam. Moreover, a magnetic field corresponding to the recording signal is applied to the magneto-optical disc 1 from a recording magnetic head of the recording/reproducing apparatus. At this time, the signal recording layer 4 is irradiated with the laser beam so that the temperature of the magneto- optical disc 1 is raised. Thus, the coercive force is reduced, causing magnetic domains corresponding to the recording signal to be recorded on the signal recording layer 4 owing to the magnetic field applied from the recording magnetic head.

When the recording signal recorded on the signal recording layer 4 is reproduced by the recording/reproducing apparatus, the magneto-optical disc 1 is, from the optical head, irradiated with a laser beam, the output of which is smaller than that of the laser beam for use in the recording operation. At this time, magneto-optical effects, such as a Kerr effect and a Faraday effect, are exerted on returned light of the laser beam owing to reflection from the signal recording layer 4, causing polarization to occur in the magneto-optical disc 1. The recording/reproducing apparatus detects a direction in which returned light is polarized so as to detect a direction of the magnetic field of the magnetic domain recorded on the signal recording layer 4. Thus, the recording signal is reproduced.

The substrate 2 having a disc-like overall shape is made of a hard material which is translucent with respect to the laser beam. The substrate 2 is made of a material, such as resin exemplified by polycarbonate resin, acrylic resin, polyolefine and epoxy resin; or a glass material, such as quartz glass. Annular grooves 2b formed in parallel with one another in the circumferential direction are provided for the substrate 2. The magneto-optical disc 1 is structured such that recording/reproducing of the recording signal with respect to the signal recording layer 4 is performed along the grooves 2b. That is, the magneto-optical disc 1 is structured such that recording tracks are formed along the grooves 2b.

The magneto-optical disc 1 has a structure that the grooves 2b meander in the radial direction at predetermined cycles with a small width. When recording/reproducing of the magneto-optical disc 1 is performed with the laser beam, the cycle of meandering of the grooves 2b is read by the recording/reproducing apparatus. As a result, the recording/reproducing apparatus is able to always and stably maintain the rotational speed of the magneto-optical disc 1 in accordance with the grooves 2b which meander at the predetermined cycle. The grooves 2b serve as a reference for location when the recording signal is recorded/reproduced with respect to the signal recording layer 4. Thus, the grooves 2b have a function for indicating the position of the magneto-optical disc 1 at which the recording signal is recorded, that is, the address. As a result, the recording/reproducing apparatus is able to quickly and accurately perform location when recording/reproducing with respect to the magneto-optical disc 1 is performed.

Each of the grooves 2b has a width not less than 730 nm nor more than 800 nm and a depth not less than 65 nm nor more than 75 nm. As a result, the magneto-optical disc 1 is able to maintain a sufficiently large defocus margin of the laser beam for recording/reproducing the recording signal. Therefore, if external impact or the like is added to the optical head of the recording/reproducing apparatus and thus deviation of the focus occurs, recording/reproducing of a signal with respect to the magneto-optical disc 1 can stably and reliably be performed.

The width of the groove 2b is a groove indicated with an arrow A shown in Fig. 2. The depth of the groove 2b is a depth indicated with an arrow B shown in Fig. 2. Hereinafter, the track pitch of the recording track is a distance indicated with an arrow C shown in Fig. 2.

The first dielectric layer 3 in the form of a thin film is made of, for example, Si₃N₄, SiN, AlN, AL₂O₃, AlSiNO, HfO₂, ZnS, ZrO₂, Y₂O₃, MgO, SiO₂, MgF₂ or LiF and formed on the substrate 2 by a thin-film forming technique, such as any one of a variety of sputtering methods. It is preferable that the material of the first dielectric layer 3 must be translucent with respect to the laser beam made incident for the purpose of performing recording/reproducing of the recording signal. Moreover, the material is required to inhibit penetration of oxygen molecules and water molecules and the material does not contain oxygen. Therefore, it is preferable that SiN, Si₃N₄ or AlN is employed.

The signal recording layer 4 having a magneto-optic recording layer formed into a thin film is provided for the upper surface of the first dielectric layer 3. The magneto-optic recording layer is made of a material, the coercive force of which is reduced owing to rise in the temperature so that the magnetization direction of the material is inverted to the direction of the external magnetic field. Moreover, the material has magneto-optic characteristics including the Kerr effect and the Faraday effect. For example, a rare earth element-transition metal alloy, such as TbFeCo, TbFeCoCr or GdFeCo, is employed to constitute the magneto-optic recording layer. Note that the signal recording layer 4 may be formed into a single layer constituted by the magneto-optic recording layer. As an alternative to this, a multilayer structure suggested to constitute, for example, a CAD (Center Aperture Ditector) disc or an MSR (Magnetically induced Super Resolution) disc, may be employed in which the dielectric layer and the like are furthermore laminated.

The signal recording layer 4 has a transferred pit and projection shape of the grooves 2b of the substrate 2. The magneto-optical disc 1 has recording tracks which are formed along the grooves 2b and with which a recording signal is recorded/reproduced with respect to the signal recording layer 4. The magneto-optical disc 1 is structured such that the track pitch of the magnetic track is 1.5 ± 0.01 µm. As a result, the recording density of the magneto-optical disc 1 can be raised as compared with the conventional magneto-optic disc having a track pitch of, for example, 1.6 µm. Hence it follows that the capacity of the magneto-optical disc 1 having substantially the same outer diameter as that of the conventional magneto-optic disc can be enlarged.

The second dielectric layer 5 made of a material similar to the material of the first dielectric layer 3 and formed into a thin film is provided for the upper surface of the signal recording layer 4.

The light reflecting layer 6 formed into a thin film is provided for the upper surface of the second dielectric layer 5. The light reflecting layer 6 has a function to serve as a reflecting layer for reflecting the laser beam allowed to pass through the signal recording layer 4 and the second dielectric layer 5. Moreover, the light reflecting layer 6 has another function to serve as a heat sink for preventing accumulation of heat in the signal recording layer 4 owing to the laser beam with which the signal recording layer 4 has been irradiated. Since the light reflecting layer 6 has the function to serves as the reflecting layer, the magneto-optical disc 1 is enabled to improve efficiency of using the laser beam when a recording/reproducing operation is performed. It is preferable that the light reflecting layer 6 is made of any one of nonmagnetic metal elements or its compound which are thermally conductive materials such that the element is employed solely or their mixture may be employed. For example, Au or Al may be employed.

The protective-film layer 7 is formed on the light reflecting layer 6 as a thin film by hardening ultraviolet-ray hardening resin applied with, for example, a spin coater. Since the magneto-optical disc 1 incorporates the protective-film layer 7, deterioration in the signal recording layer 4 and the light reflecting layer 6 owing to oxidation or the like can be prevented. Moreover, damage of each layer formed on the substrate 2 can be prevented. The protective-film layer 7 may contain a variety of lubricants. As an alternative to this, a main surface 7a of the protective-film layer 7 facing outside may be coated with a variety of lubricants. When the magneto-optical disc 1 is structured such that the recording magnetic head of the recording/reproducing apparatus slides on the main surface 7a of the protective-film layer 7, wear and heating of the recording magnetic head and the protective-film layer 7 can be prevented.

The magneto-optical disc 1 has the structure that the track pitch of the recording tracks formed on the signal recording layer 4 is 1.5 ± 0.01 µm. The width of the groove 2b formed in the substrate 2 is not less 730 nm nor more than 800 nm. The depth of the groove 2b is not less than 65 nm nor more than 75 nm. Therefore, the recording density of the magneto-optical disc 1 can be raised to enlarge the capacity. Moreover, a sufficiently large defocus margin of the laser beam can be maintained so that recording/reproducing is reliably performed.

Results of experiments of the magneto-optic disc according to the present invention will now be described. A plurality of the foregoing magneto-optic discs were manufactured which were MD which is one of standards for the optical recording medium. Thus, the relationship among quantities of defocus of the laser beam, the depths of the grooves and widths of the grooves was examined.

### Example 1

In Example 1, a magneto-optic disc incorporating a disc-shape substrate which had a diameter of 64 mm and on which the above-mentioned layers were sequentially formed similarly to the magneto-optical disc 1 was manufactured. The layers were formed by the following materials:
- Substrate: : polycarbonate
- First Dielectric Layer: : SiN
- Signal Recording Layer: : TbFeCo
- Second Dielectric Layer: : SiN
- light Reflecting Layer: : Al
- Protective-Film Layer: : ultraviolet-ray hardening resin

The thickness of each layer and the like were determined to meet the standard on the MD. The grooves were provided for the substrate such that the width and the depth of the grooves were slightly changed according to the position on the substrate. Note that the magneto-optic disc according to Example 1 was manufactured such that the track pitch of the recording track was 1.5 µm.

### Examples 2 to 5

In Examples 2 to 5, magneto-optic discs each having the substrate on which the above-mentioned layer were sequentially formed to meet the standard on the MD were manufactured similarly to Example 1. The magneto -optic discs were manufactured similarly to the magneto-optic disc according to Example 1 such that the width and depth of the groove were slightly changed according to the position on the substrate. Moreover, the track pitch was 1.5 µm.

The widths and depths of the grooves provided for the magneto-optical disc according to Examples 1 to 5 were different among the magneto-optical discs.

### 〈Relationship Among Quantity of Defocus, Depth of Groove and Width of Groove〉

An optical system conforming to the standard on the MD was employed to irradiate the recording tracks of the magneto-optic disc according to each of Examples 1 to 5. The quantity of defocus of the laser beam of each magneto-optic disc was changed to examine the relationship among the quantities of the defocus, the depths of the groove and the widths of the groove. The measurement conditions were as follows:

### Measurement Conditions

- Linear Speed of Magneto-Optic Disc: : 1.2 m/s to 1.4 m/s
- Wavelength of Laser Beam: : 780 nm
- Number of Apertures of Objective Lens: : 0.45

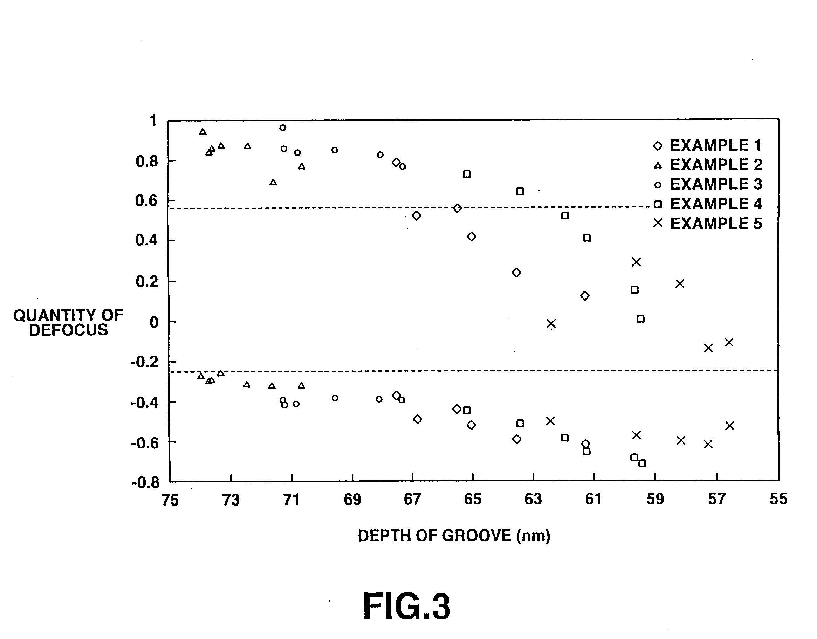

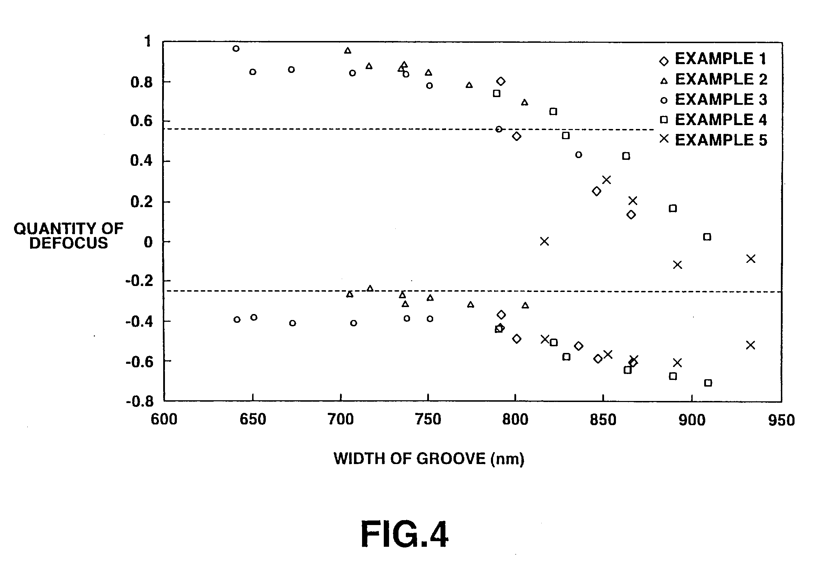

When the quantity of the defocus of the laser beam of each magneto-optic disc was gradually enlarged, the depth and width of the groove at the position at a moment three or more errors of the address read by the laser beam from the groove were made were measured by an AFM (Atomic Force Microscope). Results were shown in Figs. 3 and 4. Two dashed lines shown in each of Figs. 3 and 4 indicated upper and lower limits of the quantity of defocus with which occurrence of an error was permitted in the standard on the MD. Figs. 3 and 4 showed a fact that the focal position of the laser beam was moved deeply in the signal recording surface as the quantity of the defocus indicated with the axis of ordinate was enlarged in the positive direction. When the quantity of the defocus was enlarged in the negative direction, the focal position of the laser beam was moved toward the surface of the signal recording surface.

That is, plots on the inside of the two dashed lines shown in Figs. 3 and 4 showed a fact that even if a small quantity of defocus caused address errors to frequently occur. Namely, plots on the outside of the two dashed lines shown in Figs. 3 and 4 showed a fact that the laser beam was able to trace the recording track even if the quantity of defocus was enlarged. As the distance between the upper plot and the lower plot was elongated, the defocus margin was enlarged at the position at which the depth or the width of the groove was the same.

As can be understood from Figs. 3 and 4, the magneto-optic disc manufactured such that the track pitch of the recording track was 1.5 µm must be structured such that the depth of the groove was not less than 65 nm nor more than 75 nm and the width of the groove was not less than 730 nm nor more than 800 nm to satisfy the quantity of defocus with which occurrence of an error was permitted in the standard on the MD.

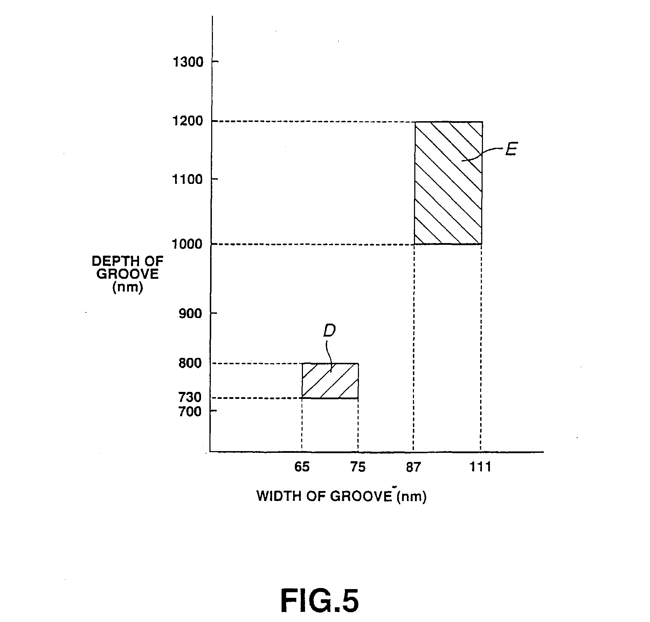

Results were shown in Fig. 5. A region indicated with symbol D shown in Fig. 5 was a range of the depths and the widths of the grooves required for the magneto-optic disc according to the present invention and manufactured to have the track pitch of 1.5 µm to obtain a satisfactory defocus margin characteristic. A region indicated with symbol E shown in Fig. 5 showed a range of the depths and widths of the groove recommended for the conventional MD having a track pitch of 1.6 µm. As can be understood from Fig. 5, the region indicated with symbol D and the region indicated with symbol E did not overlap. As can be understood from the results shown in Fig. 5, it was difficult to read the relationship among the track pitch, the depth of the groove and the width of the groove of the magneto-optic disc.

As described above, the optical recording medium according to the present invention has the structure that the track pitch of the recording track is 1.5 ± 0.01 µm or shorter which is shorter than that of the conventional optical recording medium. Therefore, the recording density can be raised. Moreover, the width and depth of the groove formed along the recording track are not less than 730 nm nor more than 800 nm and not less than 65 nm nor more than 75 nm, respectively. Therefore, a satisfactory large defocus margin of the laser beam with which recording/reproducing is performed can be maintained. Therefore, the optical recording medium according to the present invention is able to stably and reliably perform a recording/reproducing operation even in a case where the capacity is enlarged by raising the recording density.

Although the invention has been described in its preferred form and structure with a certain degree of particularity, it is understood that the present disclosure of the preferred form can be changed in the details of construction and in the combination and arrangement of parts without departing from the spirit and the scope of the invention as hereinafter claimed.

## Claims

1. An optical recording medium comprising:
a substrate on which a first dielectric layer, a signal recording layer, a second dielectric layer, a light reflecting layer and a protective-film layer are sequentially laminated, wherein
said signal recording layer has grooves formed along recording tracks,
the track pitch of said recording track is 1.5 ± 0.01 µm,
the width of each of said grooves is not less than 730 nm nor more than 800 nm and
the depth of each of said grooves is not less than 62 nm nor more than 75 nm.

2. An optical recording medium according to claim 1, wherein said transparent substrate is made of a hard material which is translucent with respect to a laser beam, and said material of said substrate is any one of polycarbonate resin, acrylic resin, polyolefine resin, epoxy resin and quartz glass.

3. An optical recording medium according to claim 1, wherein said first dielectric layer and second dielectric layer are made of any one of SiN, Si₃N₄, AlN, ZnS, MgF₂ and LiF, and said first dielectric layer and second dielectric layer are translucent with respect to an incident laser beam for performing recording/reproducing the recording signal, oxygen and water molecules cannot penetrate said first dielectric layer and second dielectric layer, and said first dielectric layer and second dielectric layer do not contain oxygen.

4. An optical recording medium according to claim 1, wherein said signal recording layer is made of any one of TbFeCo, TbFeCoCr and GdFeCo and permitted to be formed into a single-layer structure or a multilayer structure formed by laminating dielectric layers, the coercive force of said signal recording layer is reduced owing to rise in the temperature higher than the Curie temperature so that the direction of magnetization of said signal recording layer is inverted to the direction of an external magnetic field, and said signal recording layer has magnetic optical characteristics including a Kerr effect and a Faraday effect.

5. An optical recording medium according to claim 1, wherein said material of said reflecting layer is made of a material, such as Au or Al which is a thermally conductive material such that any one of nonmagnetic metal elements or their compounds is solely employed or their mixture is employed, and said reflecting layer has a function to prevent accumulation of heat in said signal recording layer owing to the laser beam with which said signal recording layer has been irradiated.

6. An optical recording medium according to claim 1, wherein said protective-film layer is formed by hardening ultraviolet-ray hardening resin applied with a spin coater or the like.
